(19) **Europäisches Patentamt European Patent Office Office européen des brevets**

(11) **EP 4 478 386 A1**

(12) **EUROPEAN PATENT APPLICATION**
published in accordance with Art. 153(4) EPC

(43) Date of publication:
**18.12.2024 Bulletin 2024/51**

(21) Application number: **22926230.8**

(22) Date of filing: **27.12.2022**

(51) International Patent Classification (IPC):
*H01F 30/04* (2006.01)   *H01F 30/06* (2006.01)
*H02M 3/00* (2006.01)   *H02M 3/335* (2006.01)
*H02M 1/00* (2006.01)   *H02M 1/44* (2007.01)

(52) Cooperative Patent Classification (CPC):
**H01F 30/04; H01F 30/06; H02M 1/00; H02M 1/44; H02M 3/00; H02M 3/335**

(86) International application number:
**PCT/KR2022/021407**

(87) International publication number:
**WO 2023/153634 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.02.2022 KR 20220016943**

(71) Applicant: **LG INNOTEK CO., LTD.**
**Seoul 07796 (KR)**

(72) Inventors:
• **JEONG, Jong Sun**
**Seoul 07796 (KR)**
• **LEE, Jae Sam**
**Seoul 07796 (KR)**
• **LEE, Sang Won**
**Seoul 07796 (KR)**

(74) Representative: **Plasseraud IP**
**104 Rue de Richelieu**
**CS92104**
**75080 Paris Cedex 02 (FR)**

(54) **TRANSFORMER AND POWER SUPPLY USING SAME**

(57) A power supply according to an embodiment comprises: a substrate; a switching unit disposed on the substrate and alternately switching input direct current power so as to convert same into alternating current power; a transformer disposed on the substrate and converting the level of the alternating current power; a rectifying unit disposed on a substrate and rectifying the alternating current power having the level converted by the transformer; and an output inductor disposed adjacent to the transformer and having one end connected to the transformer, wherein a plurality of terminals included in the transformer include first and third terminals, a second terminal located between the first terminal and the third terminal, and an additional terminal extending from the second terminal to the outside of the first or third terminal, and the one end of the output inductor is connected to the additional terminal of the transformer.

**FIG. 4A**

EP 4 478 386 A1

## Description

[Technical Field]

Embodiments relate to a transformer and a power supply using the same.

[Background Art]

In recent years, demand for high-power power supplies for power of servers and vehicles (e.g., direct current/direct current (DC-DC) converters or on-board chargers (OBCs)) has increased.

As a high-power power supply, a full-bridge circuit is used rather than a half-bridge circuit. A high-power power module of about 2 kW or greater (e.g., 4 kW), for example, a phase shift full bridge (PSFB) circuit may be used as a power supply. The PSFB circuit is widely used as a power supply because the same enables zero voltage switching (ZVS) operation through soft switching of active elements and thus minimizes switching loss. However, such a PSFB circuit has poor electromagnetic interference (EMI) performance. Therefore, research into solving this problem is underway.

[Disclosure]

[Technical Problem]

Embodiments provide a transformer having improved noise performance and a power supply using the same.

[Technical Solution]

A transformer according to an embodiment may include a plurality of terminals, wherein the plurality of terminals may include first and third terminals, a second terminal located between the first terminal and the third terminal, and an additional terminal extending from the second terminal to the outside of the first or third terminal.

A power supply according to another embodiment may include a substrate, a switching unit disposed on the substrate and configured to alternately switch input direct current power to convert the input direct current power into alternating current power, a transformer disposed on the substrate and configured to convert the level of the alternating current power, a rectifier disposed on the substrate and configured to rectify the alternating current power having the level converted by the transformer, and an output inductor disposed adjacent to the transformer and including an end connected to the transformer, wherein the transformer may include a plurality of terminals, the plurality of terminals may include first and third terminals, a second terminal located between the first terminal and the third terminal, and an additional terminal extending from the second terminal to the outside of the first or third terminal, and the end of the output inductor may be connected to the additional terminal of the transformer.

In an example, the additional terminal may include a terminal body disposed outside the first terminal or the third terminal on the substrate and a connection portion connecting the second terminal to the terminal body.

In an example, the connection portion may bypass the first terminal or the third terminal in a horizontal direction to connect the second terminal to the terminal body.

In an example, the connection portion may bypass the first terminal or the third terminal in a vertical direction to connect the second terminal to the terminal body.

In an example, the connection portion may have a rounded shape.

In an example, the output inductor may be disposed on the substrate, and at least a portion of the output inductor may be disposed so as to face the terminal body.

In an example, the rectifier may include a first switch disposed between the first terminal and the first ground to perform switching operation and a second switch disposed between the third terminal and the second ground to perform switching operation, and the first ground and the second ground may be connected to each other.

In an example, the first switch and the second switch may be disposed so as to oppose each other, and the output inductor may be disposed outside the first or second switch.

In an example, the power supply may further include an output terminal connected to the other end of the output inductor.

In an example, the output terminal may include a first capacitor disposed between the other end of the output inductor and the second ground, a filter inductor including an end connected to the other end of the output inductor, and a second capacitor disposed between the other end of the output inductor and the second ground.

In an example, the maximum value of the spacing distance between the first, second, or third terminal and the first capacitor may be 10 mm.

In an example, the second terminal may include a lower end extending to the substrate or spaced apart from the substrate.

A power supply according to still another embodiment may include a substrate, a switching unit disposed on the substrate and configured to alternately switch input direct current power to convert the input direct current power into alternating current power, a transformer disposed on the substrate and configured to convert the level of the alternating current power, a rectifier disposed on the substrate and configured to rectify the alternating current power having the level converted by the transformer, and an output inductor disposed adjacent to the transformer and connected to the transformer, wherein the transformer may include a plurality of terminals, the plurality of terminals may include first and third terminals, a second terminal located between the first terminal and the third terminal, and an additional terminal extending from the second terminal to the outside of the first or third terminal, the rectifier may include a first switch connected between the first terminal of the transformer and a first ground and a second switch connected between a second ground connected to the first ground and the third terminal, and the output inductor may be connected to the additional terminal of the transformer.

[Advantageous Effects]

A transformer and a power supply using the same according to embodiments have improved power module operation characteristics and EMI noise performance.

[Description of Drawings]

FIG. 1 illustrates a circuit diagram of a power supply using a transformer according to an embodiment.
FIG. 2A illustrates a plan view of an embodiment of the power supply using the transformer shown in FIG. 1.
FIG. 2B illustrates a plan view of another embodiment of the power supply using the transformer shown in FIG. 1.
FIG. 3 illustrates a perspective view of a transformer included in a power supply according to still another embodiment.
FIGs. 4A and 4B illustrate front views of embodiments of the transformer shown in FIG. 2A.
FIG. 5 is a diagram conceptually showing a current path on a secondary side of the transformer shown in FIG. 1.
FIG. 6 illustrates a circuit diagram of a power supply according to a comparative example.
FIG. 7 is a diagram conceptually showing a current path on a secondary side of the transformer shown in FIG. 6.
FIG. 8 schematically illustrates a plan view of the power supply according to the comparative example.
FIG. 9 is a view of the transformer shown in FIG. 8 when viewed from the front.
FIG. 10 is a graph indicating a result of testing electromagnetic compatibility of the power supply according to the comparative example.
FIG. 11 is a graph indicating a result of testing electromagnetic compatibility of the power supply according to the embodiment.

[Best Mode]

Hereinafter, the present disclosure will be described more fully hereinafter with reference to the accompanying drawings, in which various embodiments are shown. The examples, however, may be embodied in many different forms, and should not be construed as being limited to the embodiments set forth herein. Rather, these embodiments are provided so that this disclosure will be more thorough and complete, and will more fully convey the scope of the disclosure to those skilled in the art.

It will be understood that when an element is referred to as being "on" or "under" another element, it may be directly on/under the element, or one or more intervening elements may also be present. When an element is referred to as being "on" or "under", "under the element" as well as "on the element" may be included based on the element.

In addition, relational terms, such as "first", "second", "on/upper part/above", and "under/lower part/below", are used only to distinguish between one subject or element and another subject or element, without necessarily requiring or involving any physical or logical relationship or sequence between the subjects or elements.

Hereinafter, a transformer and a power supply using the same according to embodiments will be described using the Cartesian coordinate system, but the embodiments are not limited thereto. That is, according to the Cartesian coordinate system, the x-axis, the y-axis, and the z-axis are perpendicular to each other, but the embodiments are not limited thereto. That is, the x-axis, the y-axis, and the z-axis may intersect each other obliquely rather than being perpendicular to each other.

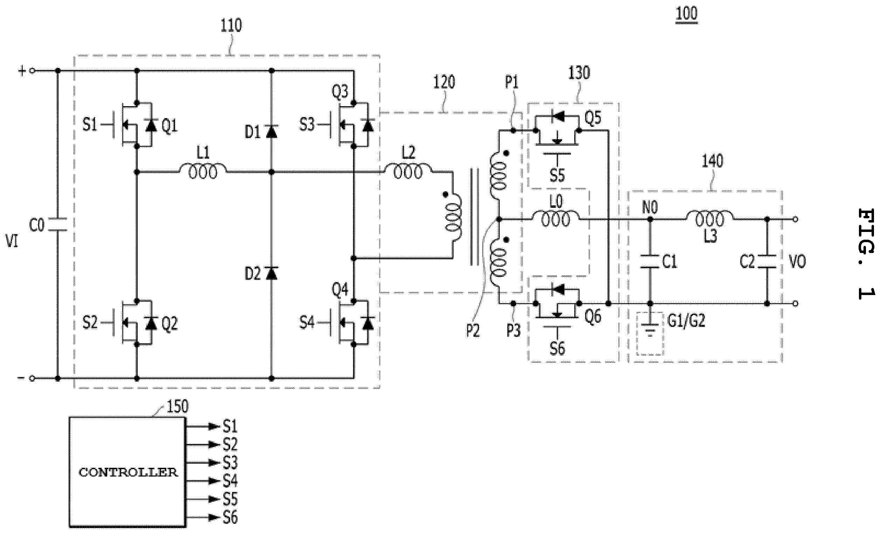

FIG. 1 illustrates a circuit diagram of a power supply 100 using a transformer according to an embodiment.

The power supply 100 using a transformer shown in FIG. 1 (hereinafter referred to as a "power supply") may include a switching unit 110, a transformer 120, a rectifier 130, an output inductor LO, and a controller 150. In addition, the power supply 100 may further include an input terminal. In addition, the power supply 100 may further include an output terminal (or filter) 140.

The power supply shown in FIG. 1 may be a type of phase shift full bridge (PSFB) circuit.

The switching unit 110 may alternately switch input direct current power VI to convert the input direct current power into alternating current power, and may output the converted alternating current power to the transformer 120. To this end, the switching unit 110 may perform switching operation in a complementary alternating manner using four switching elements.

For example, the switching unit 110 may include four switching elements Q1, Q2, Q3, and Q4. The first switching element Q1 may be turned on or off in response to a first gate signal S1, the second switching element Q2 may be turned on or off in response to a second gate signal S2, the third switching element Q3 may be turned on or off in response to a third gate signal S3, and the fourth switching element Q4 may be turned on or off in response to a fourth gate signal S4. In order to control this switching operation, the controller 150 may generate the first to fourth gate signals S1 to S4 and may provide the first to fourth gate signals S1 to S4 to the first to fourth switching elements Q1, Q2, Q3, and Q4, respectively. In addition, the switching unit 110 may include a first inductor L1 and first and second diodes D1 and D2.

Since the switching operation of the switching unit 110 having the configuration shown in FIG. 1 is well known, detailed description thereof will be omitted. Further, the switching unit 110 of the power supply 100 according to the embodiment may have a different configuration from that shown in FIG. 1, so long as the switching unit 110 is capable of alternately switching the input direct current power VI to convert the same into alternating current power. That is, the configuration of the switching unit 110 shown in FIG. 1 may be replaced with the configuration of a general switching unit included in a PSFB.

The input direct current power VI may be provided to the switching unit 110 from the input terminal.

For example, the input terminal may include an input capacitor CO and a load (not shown) connected in parallel to the input capacitor CO. The input terminal may be a high-voltage energy storage device or a bus, or may be omitted.

Meanwhile, the transformer 120 according to the embodiment converts the level of the alternating current power output from the switching unit 110.

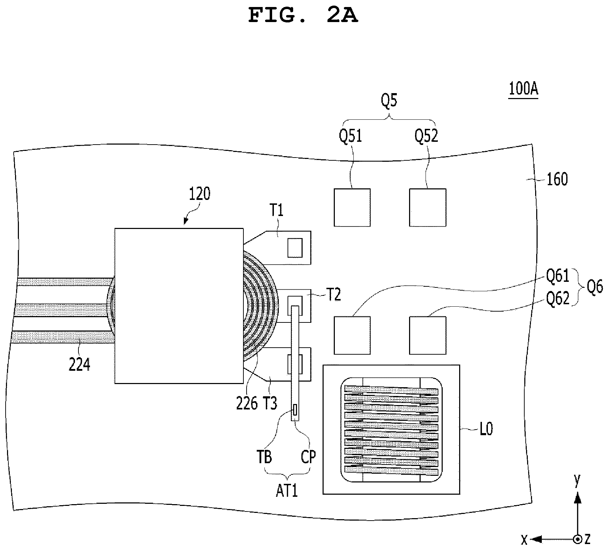

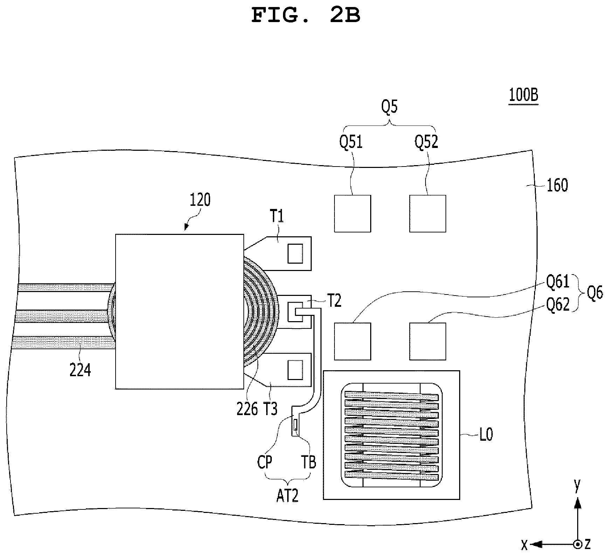

FIG. 2A illustrates a plan view of an embodiment 100A of the power supply 100 using the transformer 120 shown in FIG. 1, and FIG. 2B illustrates a plan view of another embodiment 100B of the power supply 100 using the transformer 120 shown in FIG. 1. For convenience of description, illustration of the input capacitor CO, the switching unit 110, and the output terminal 140 shown in FIG. 1 is omitted in FIGs. 2A and 2B.

The power supplies 100A and 100B according to the embodiments shown in FIGs. 2A and 2B each may include a transformer 120, rectifiers Q5 and Q6, an output inductor LO, and a substrate (or printed circuit board (PCB)) 160.

The transformer 120, the rectifiers Q5 and Q6, and the output inductor LO shown in FIGs. 2A and 2B perform the same functions as the transformer 120, the rectifier 120, and the output inductor LO shown in FIG. 1, respectively.

The transformer 120, the rectifiers Q5 and Q6, and the output inductor LO may be disposed on the substrate 160. In addition, although not shown, the switching unit 110 and the output terminal 140 may also be disposed on the substrate 160. In addition, the controller 150 may also be disposed on the substrate 160.

According to the embodiment, as shown in FIGs. 2A and 2B, the transformer 120 may include a plurality of terminals. The plurality of terminals may include a first terminal T1, a second terminal T2, a third terminal T3, and an additional terminal AT. The first terminal T1 shown in FIGs. 2A and 2B may be connected to a first output pin P1 of the transformer 120 shown in FIG. 1, the second terminal T2 shown in FIGs. 2A and 2B may be connected to a second output pin P2 of the transformer 120 shown in FIG. 1, and the third terminal T3 shown in FIGs. 2A and 2B may be connected to a third output pin P3 of the transformer 120 shown in FIG. 1. Referring to FIGs. 2A and 2B, the second terminal T1 may be located between the first terminal T1 and the third terminal T3, and may be disposed, for example, halfway between the first terminal T1 and the third terminal T3.

Further, the additional terminal AT (AT1 or AT2) may extend from the second terminal T2 to the outside of the first terminal T1 or the third terminal T3. Here, the outside of the first terminal T1 may refer to a position closer to the first terminal T1 than to the third terminal T3 among positions outside the space between the first terminal T1 and the third terminal T3 aligned in a first direction (e.g., y-axis direction). In addition, the outside of the third terminal T3 may refer to a position closer to the third terminal T3 than to the first terminal T1 among positions outside the space between the first terminal T1 and the third terminal T3 aligned in the first direction (e.g., y-axis direction).

For example, as shown in FIGs. 2A and 2B, the additional terminal AT (AT1 or AT2) may extend to the outside of the third terminal T3.

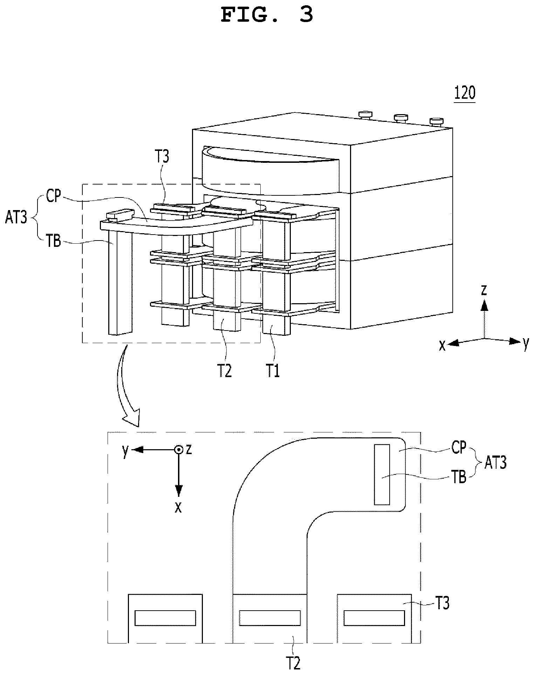

FIG. 3 illustrates a perspective view of a transformer 120 included in a power supply according to still another embodiment.

The additional terminal AT (AT1, AT2, or AT3) may include a terminal body TB and a connection portion CP.

The terminal body TB may be disposed outside the first terminal T1 or the third terminal T3 on the substrate 160. For example, as shown in each of FIGs. 2A, 2B, and 3, the terminal body TB may be disposed outside the third terminal T3.

The connection portion CP serves to connect the second terminal T2 to the terminal body TB.

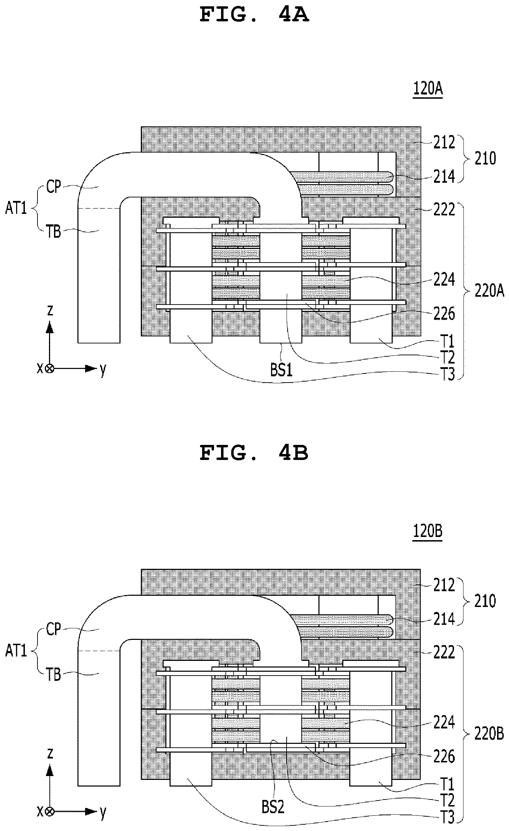

According to an embodiment, the connection portion CP may bypass the first terminal T1 or the third terminal T3 in a vertical direction (e.g., z-axis direction) to connect the second terminal T2 to the terminal body TB. For example, as illustrated in FIG. 2A and FIGs. 4A and 4B to be described later, the connection portion CP may bypass the third terminal T3 in the vertical direction to connect the second terminal T2 to the terminal body TB.

According to another embodiment, the connection portion CP may bypass the first terminal T1 or the third terminal T3 in a horizontal direction (e.g., x-axis and y-axis directions) to connect the second terminal T2 to the terminal body TB. For example, as illustrated in FIGs. 2B and 3, the connection portion CP may bypass the third terminal T3 in the horizontal direction to connect the second terminal T2 to the terminal body TB.

The connection portion CP may have at least one of a twisted, rounded, or folded shape, but the embodiments are not limited to any specific shape of the connection portion CP. For example, the connection portion CP may have a rounded shape, as illustrated in FIG. 3 and FIGs. 4A and 4B to be described later.

The connection portion CP may be formed in various shapes without being limited to the aforementioned shape, so long as resistance and processing costs are capable of being reduced by simplifying the shape of the additional terminal AP and minimizing a section in which the additional terminal AP is formed.

The second inductor L2 included in the transformer 120 may be an inductor formed according to leakage inductance or a commutating inductor, or may be an inductor intentionally added.

FIGs. 4A and 4B illustrate front views of embodiments 120A and 120B of the transformer 120 shown in FIG. 2A.

The transformers 120A and 120B shown in FIGs. 4A and 4B each may include a zero voltage switching (ZVS) inductor 210 and primary and secondary sides 220A or 220B.

The ZVS inductor 210 serves to return a residual current to the input side so that there is no FET operation loss, and may correspond to the second inductor L2 shown in FIG. 1. The ZVS inductor 210 may include a first core 212 and a first coil 214. The first core 212 may induce electromagnetism, and the first coil 214 may generate induced electromotive force through change in magnetic flux.

The primary and secondary sides 220A or 220B serve to convert power (voltage or current) on the input side according to a turn ratio to transmit the converted power to the output side. For example, the primary and secondary sides 220A shown in FIG. 4A may include a transformer core 222, a transformer primary coil 224, a transformer secondary coil 226, first to third terminals T1, T2, and T3, and an additional terminal AT, and the primary and secondary sides 220B shown in FIG. 4B may include a transformer core 222, a transformer primary coil 224, a transformer secondary coil 226, first to third terminals T1, T2, and T3, and an additional terminal AT. FIGs. 4A and 4B are identical to each other, except that the positions of the lower ends BS1 and BS2 of the second terminal T2 are different from each other.

The transformer core 222 serves to induce electromagnetism, the transformer primary coil 224 serves to generate magnetic flux and transmit current, the transformer secondary coil 226 serves to generate magnetic flux in the direction opposite the primary coil 224 and transmit current, and the first to third terminals T1, T2, and T3 are connected to the transformer secondary coil 226. In addition, as described above, the additional terminal AT serves to connect the second terminal T2 to the output inductor LO.

According to an embodiment, as shown in FIG. 4A, the lower end BS1 of the second terminal T2 may extend to the substrate 160 to be disposed thereon. In this case, the lower end BS1 may be in contact with the substrate 160. When the second terminal T2 is implemented as shown in FIG. 4A, the heat dissipation characteristics of the transformer 120 may be improved, and the durability thereof against vibration may also be improved.

According to another embodiment, as shown in FIG. 4B, the lower end BS2 of the second terminal T2 may be disposed so as to be spaced apart from the substrate 160. That is, the lower end BS2 may be disposed so as to be spaced a predetermined distance from the substrate 160. When the second terminal T2 is implemented as shown in FIG. 4B, a margin of a PCB pattern may be secured.

Referring again to FIG. 1, the rectifier 130 may be connected to the first terminal T1 and the third terminal T3 of the transformer 120 to rectify the alternating current power having the level converted by the transformer 120. That is, the rectifier 130 may have a center-tap shape.

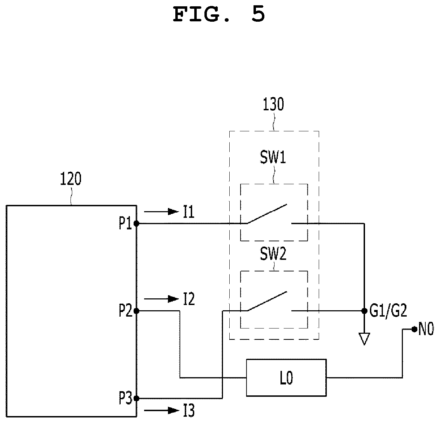

FIG. 5 is a diagram conceptually showing a current path on the secondary side of the transformer 120 shown in FIG. 1.

For example, the rectifier 130 may include a first switch SW1 and a second switch SW2.

The first switch SW1 may be disposed between the first terminal T1 and a first ground G1 to perform switching operation, and the second switch SW2 may be disposed between the third terminal T3 and a second ground G2 to perform switching operation. That is, as shown in FIG. 5, the first switch SW1 may be disposed between the first output pin P1 connected to the first terminal T1 and the first ground G1, and the second switch SW2 may be disposed between the third output pin P3 connected to the third terminal T3 and the second ground G2.

The output inductor LO may be disposed between the second output pin P2 of the transformer 120 and an output node NO. Here, the output node NO may correspond to a node on the input side of the output terminal 40, as shown in FIG. 1.

According to the embodiment, as shown in FIGs. 1 and 5, the first ground G1 and the second ground G2 may be connected to each other to be integrated.

Each of the first and second switches SW1 and SW2 may be implemented as a bipolar transistor or a field effect transistor (FET).

For example, as shown in FIG. 1, the first switch SW1 may be implemented as a fifth FET Q5. The fifth FET Q5 may be turned on or off in response to a fifth gate signal S5, and may be disposed between the first output pin P1 of the transformer 120 and the first ground G1.

The second switch SW2 may be implemented as a sixth FET Q6. The sixth FET Q6 may be turned on or off in response to a sixth gate signal S6, and may be disposed between the third output pin P3 of the transformer 120 and the second ground G2.

In order to perform the above-described operation, the controller 150 may generate the fifth and sixth gate signals S5 and S6 and may provide the fifth and sixth gate signals S5 and S6 to the first and second switches SW1 and SW2.

Alternatively, as shown in FIGs. 2A and 2B, the first switch SW1 may be implemented as 5-1st and 5-2nd FETs Q51 and Q52, and the second switch SW2 may be implemented as 6-1st and 6-2nd FETs Q61 and Q62.

Further, the first and second switches SW1 and SW2 shown in FIG. 5 may be implemented in various forms other than those shown in the drawings.

The output inductor LO is disposed adjacent to the transformer 120 and has an end connected to the transformer 120. One end of the output inductor LO may be connected to the additional terminal AT of the transformer 120. In this way, one end of the output inductor LO may be connected to the second terminal T2 of the transformer 120 through the additional terminal AT. The output inductor LO may be mounted on the substrate 160 in various manners using, for example, soldering, SMD, or screws. For example, in FIGs. 2A and 2B, a lead may pass through the substrate 160, so that the output inductor LO may be mounted on the substrate 160 through soldering.

In addition, the output inductor LO may be disposed so as to be tilted at 90° or 180° depending on the position or structure of the secondary coil 226 of the transformer or the pattern of the substrate 160.

As shown in FIGs. 2A and 2B, at least a portion of the output inductor LO may be disposed on the substrate 160 while facing the terminal body TB in a second direction (e.g., x-axis direction). Although not visible, the output inductor LO is electrically connected to the terminal body TB within the substrate 160 shown in FIGs. 2A and 2B.

In addition, as shown in each of FIGs. 2A and 2B, the first switch Q5 and the second switch Q6 may be disposed on the substrate 160 so as to oppose each other in the first direction (e.g., y-axis direction). In this case, the output inductor LO may be disposed outside the first or second switch Q5 or Q6. Here, the outside of the first switch Q5 may refer to a position closer to the first switch Q5 than to the second switch Q6 among positions outside the space between the first switch Q5 and the second switch Q6 facing each other in the first direction (e.g., y-axis direction). In addition, the outside of the second switch Q6 may refer to a position closer to the second switch Q6 than to the first switch Q5 among positions outside the space between the first switch Q5 and the second switch Q6 facing each other in the first direction (e.g., y-axis direction).

The output terminal 140 may be connected to the other end of the output inductor LO. For example, the output terminal 140 may filter a signal between the output node NO and the second ground G2 and may output a filtration result VO.

The output terminal 140 may be a type of filter and may include various types of capacitors or inductors.

For example, referring to FIG. 1, the output terminal 140 may include first and second capacitors C1 and C2 and a filter inductor L3.

The first capacitor C1 may be disposed between the other end of the output inductor LO and the second ground G2, the filter inductor L3 may have an end connected to the other end of the output inductor LO, and the second capacitor C2 may be disposed between the other end of the filter inductor L3 and the second ground G2.

The spacing distance between the first terminal T1, the second terminal T2, or the third terminal T3 and the output node NO (e.g., first capacitor C1) needs to be as short as possible in order to improve electromagnetic interference (EMI) performance. For example, the maximum value of the spacing distance between the first terminal T1, the second terminal T2, or the third terminal T3 and the first capacitor C1 may be 10 mm, but the embodiments are not limited thereto.

Hereinafter, a power supply according to a comparative example and the power supply according to the embodiment will be described with reference to the accompanying drawings.

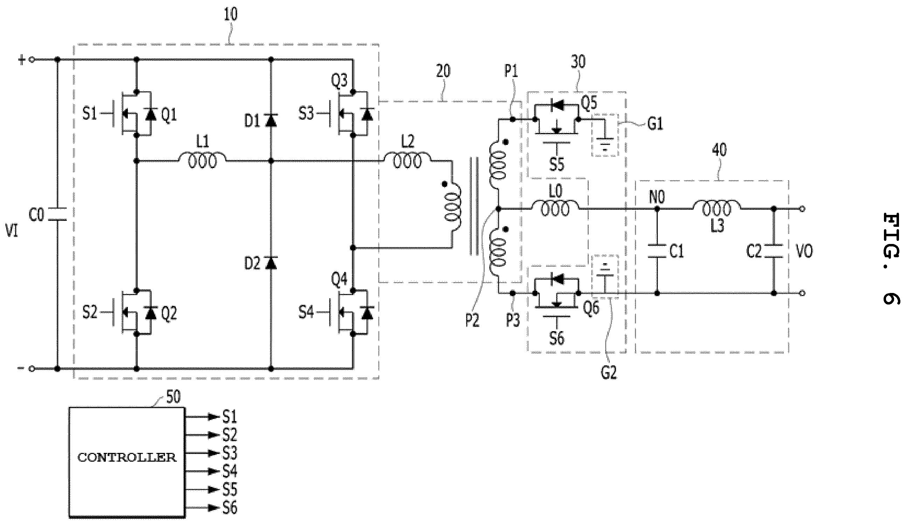

FIG. 6 illustrates a circuit diagram of a power supply according to a comparative example.

The power supply according to the comparative example shown in FIG. 6 may include an input terminal including an input capacitor CO, a switching unit 10, a transformer 20, a rectifier 30, an output inductor LO, an output terminal 40, and a controller 50. The input terminal, the switching unit 10, the transformer 20, the rectifier 30, the output inductor LO, the output terminal 40, and the controller 50 shown in FIG. 6 correspond to the input terminal, the switching unit 110, the transformer 120, the rectifier 130, the output inductor LO, the output terminal 140, and the controller 150 shown in FIG. 1, respectively, and thus duplicate description thereof will be omitted.

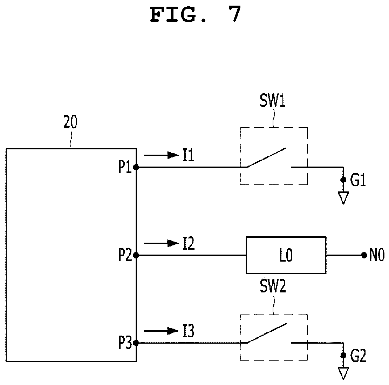

FIG. 7 is a diagram conceptually showing a current path on the secondary side of the transformer 20 shown in FIG. 6.

The first switch SW1 and the second switch SW2 shown in FIG. 7 correspond to the rectifier 30 shown in FIG. 6 and perform the same functions as the first switch SW1 and the second switch SW2 shown in FIG. 5, respectively, and thus duplicate description thereof will be omitted.

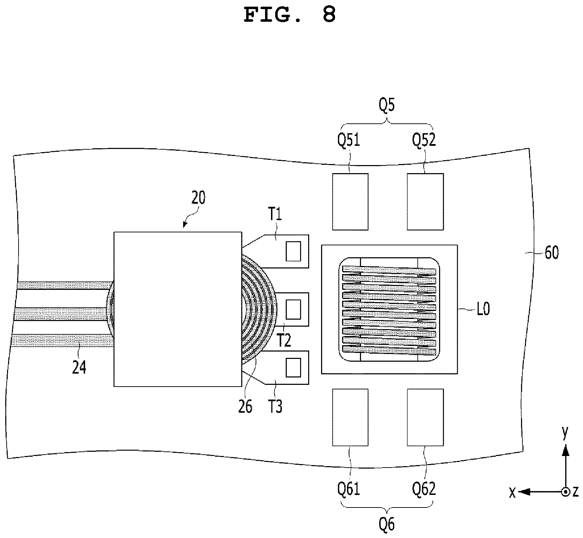

FIG. 8 schematically illustrates a plan view of the power supply according to the comparative example.

The power supply according to the comparative example shown in FIG. 8 may include a transformer 20, a first switch Q5, a second switch Q6, an output inductor LO, and a substrate 60. The transformer 20, the first switch Q5, the second switch Q6, the output inductor LO, and the substrate 60 shown in FIG. 8 perform the same functions as the transformer 120, the first switch Q5, the second switch Q6, the output inductor LO, and the substrate 160 shown in FIG. 2A or 2B, respectively, and thus duplicate description of the same parts will be omitted.

The transformer 20 according to the comparative example includes first, second, and third terminals T1, T2, and T3 connected to first, second, and third output pins P1, P2, and P3, respectively, and the second terminal T2 is disposed between the first terminal T1 and the third terminal T3. However, unlike the embodiment, the second terminal T2 is directly connected to the output inductor LO rather than being connected thereto via an additional terminal AP, and the output inductor LO is disposed between the first switch Q5 and the second switch Q6.

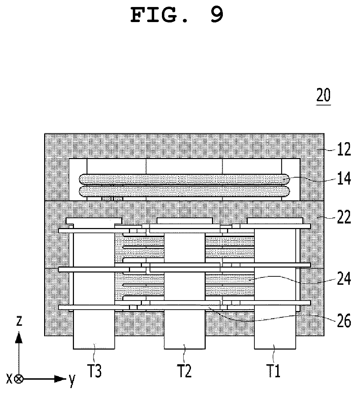

FIG. 9 is a view of the transformer 20 shown in FIG. 8 when viewed from the front.

As shown in FIG. 9, the transformer 20 may include a first core 12, a first coil 14, a transformer core 22, a transformer primary coil 24, a transformer secondary coil 26, and first to third terminals T1, T2, and T3. The first core 12, the first coil 14, the transformer core 22, the transformer primary coil 24, the transformer secondary coil 26, and the first to third terminals T1, T2, and T3 shown in FIG. 9 perform the same functions as the first core 212, the first coil 214, the transformer core 222, the transformer primary coil 224, the transformer secondary coil 226, and the first to third terminals T1, T2, and T3 shown in FIG. 4A or 4B, respectively, and thus duplicate description thereof will be omitted. However, the transformer 20 shown in FIG. 9 does not include an additional terminal AT, unlike the embodiments shown in FIGs. 4A and 4B.

Referring to FIGs. 5 and 7, the first output pin P1 on the secondary side of the transformer 120 or 20 is connected to the first ground G1 via the first switch SW1, and the third output pin P3 on the secondary side is connected to the second ground G2 via the second switch SW2.

In this configuration, a large current I2 may pass through the second output pin P2 of the transformer 120 and may flow to the output inductor LO, and currents I1 and I3 each having a level equal to half the level of the large current I2 may pass through the first and third output pins P1 and P3, respectively, and may flow to the grounds G1 and G2 via the switches SW1 and SW2, respectively.

In this case, as shown in FIGs. 6 and 7, when the first output pin P1 and the third output pin P3 are spaced apart from each other with the second output pin P2 interposed therebetween, energy levels may be unbalanced. As shown in FIGs. 6 and 7, when the first ground G1 and the second ground G2 are spaced apart from each other without being connected to each other, a potential difference may be caused between the grounds, as shown in Equation 1 below.

[Equation 1]

$$\Delta Vg = |Vg1 - Vg2|$$

Here, $\Delta Vg$ represents the potential difference between the grounds, Vg1 represents the potential of the first ground G1, and Vg2 represents the potential of the second ground G2.

Due to the potential difference $\Delta Vg$ shown in Equation 1, EMI noise of the power supply according to the comparative example may increase, and the current density of the path through which a large current flows may increase, whereby the heat generation temperature of the FETs Q5 and Q6 implementing the respective switches SW1 and SW2 may increase.

As a way to reduce this EMI noise, the first and second grounds G1 and G2 need to be formed as close to each other as possible or formed so as to gather on one side. However, because the second output pin P2, through which a large current flows, is located between the first output pin P1 and the third output pin P3, there is a limitation in configuring a pattern width of a printed circuit board (PCB).

If it is intended to change the position of the second output pin P2 in the transformer 20 in order to solve the above problem, the shape of the transformer secondary coil 26 may become complicated, processing costs may increase, and assembly yield may be lowered.

Therefore, in the power supply according to the embodiment, the second output pin P2 is placed at the same position as in the comparative example, and the second terminal T2 connected to the second output pin P2 is connected to the output inductor LO via the additional terminal AT rather than being directly connected thereto, so that the first ground G2 and the second ground G2 are connected to each other. Accordingly, the potential difference $\Delta Vg$ occurring between the grounds in the comparative example is not caused, with a result that EMI noise is smaller than that of the comparative example, and the current density of the path through which a large current flows is relatively low. That is, power module operation characteristics and EMI performance may be improved.

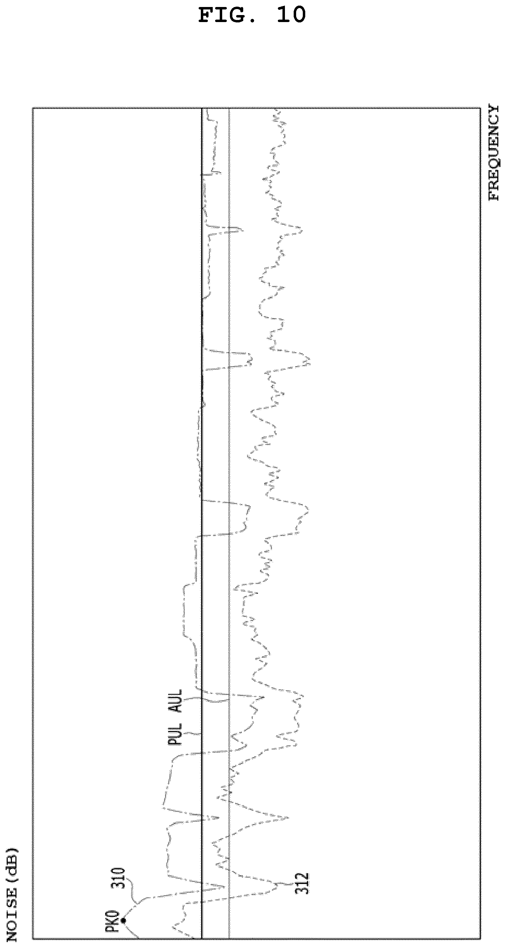

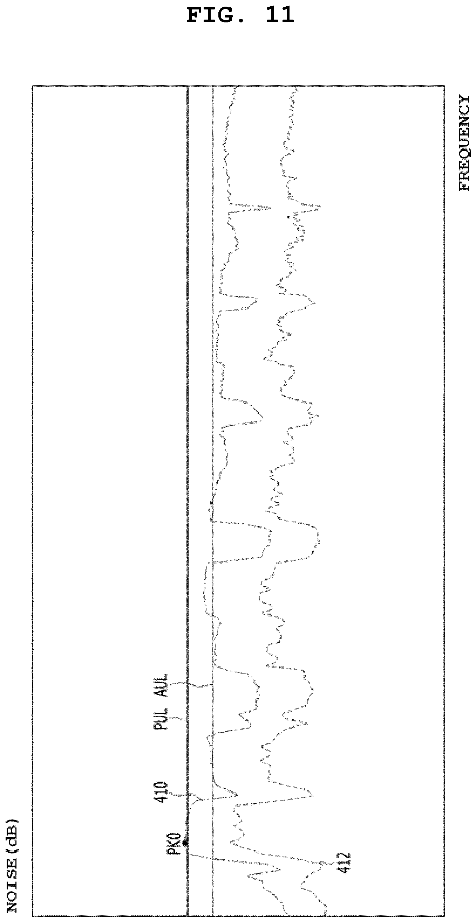

FIG. 10 is a graph indicating a result of testing electromagnetic compatibility (EMC) of the power supply according to the comparative example, and FIG. 11 is a graph indicating a result of testing electromagnetic compatibility of the power supply according to the embodiment. In each graph, the horizontal axis represents frequency, and the vertical axis represents intensity (dB) of noise.

Referring to FIG. 10, in the power supply according to the comparative example, the peak value 310 of the noise exceeds a peak upper limit PUL, and the average value 312 of the noise exceeds an average upper limit AUL.

In contrast, referring to FIG. 11, in the power supply according to the embodiment, the peak value 410 of the noise does not exceed the peak upper limit PUL, and the average value AV of the noise does not exceed the average upper limit AUL.

The maximum value PKO of the peak value 410 shown in FIG. 11 may be reduced by 10 dB or more as compared to the maximum value PKO of the peak value 310 of the noise shown in FIG. 10. As a result, it may be seen that the noise performance of the power supply according to the embodiment is improved.

While the present disclosure has been particularly shown and described with reference to exemplary embodiments thereof, these embodiments are only proposed for illustrative purposes, and do not restrict the present disclosure, and it will be apparent to those skilled in the art that various changes in form and detail may be made without departing from the essential characteristics of the embodiments set forth herein. For example, respective configurations set forth in the embodiments may be modified and applied. Further, differences in such modifications and applications should be construed as falling within the scope of the present disclosure as defined by the appended claims.

[Mode for Invention]

Various embodiments have been described in the best mode for carrying out the disclosure.

[Industrial Applicability]

A transformer and a power supply using the same according to embodiments may be used for servers and vehicles.

**Claims**

1. A transformer, comprising:

    a plurality of terminals,
    wherein the plurality of terminals includes:

        first and third terminals;
        a second terminal located between the first terminal and the third terminal; and
        an additional terminal extending from the second terminal to an outside of the first or third terminal.

2. A power supply, comprising:

    a substrate;
    a switching unit disposed on the substrate, the switching unit being configured to alternately switch input direct current power to convert the input direct current power into alternating current power;
    a transformer disposed on the substrate, the transformer being configured to convert a level of the alternating current power;
    a rectifier disposed on the substrate, the rectifier being configured to rectify the alternating current power having the level converted by the transformer; and
    an output inductor disposed adjacent to the transformer, the output inductor including an end connected to the transformer,
    wherein the transformer includes a plurality of terminals,
    wherein the plurality of terminals includes:

        first and third terminals;
        a second terminal located between the first terminal and the third terminal; and
        an additional terminal extending from the second terminal to an outside of the first or third terminal, and
        wherein the end of the output inductor is connected to the additional terminal of the transformer.

3. The power supply according to claim 2, wherein the additional terminal includes:

    a terminal body disposed in the outside of the first terminal or the third terminal on the substrate; and
    a connection portion connecting the second terminal to the terminal body.

4. The power supply according to claim 3, wherein the connection portion bypasses the first terminal or the third terminal in a horizontal or vertical direction to connect the second terminal to the terminal body.

5. The power supply according to claim 3, wherein the output inductor is disposed on the substrate, and at least a portion of the output inductor is disposed so as to face the terminal body.

6. The power supply according to claim 2, wherein the rectifier includes:

    a first switch disposed between the first terminal and the first ground to perform switching operation; and
    a second switch disposed between the third terminal and the second ground to perform switching operation, and
    wherein the first ground and the second ground are connected to each other.

7. The power supply according to claim 6, wherein the first switch and the second switch are disposed so as to oppose each other, and
wherein the output inductor is disposed outside the first or second switch.

8. The power supply according to claim 6, further comprising an output terminal connected to another end of the output inductor,

wherein the output terminal includes:

a first capacitor disposed between the other end of the output inductor and the second ground; a filter inductor including an end connected to the other end of the output inductor; and a second capacitor disposed between the other end of the output inductor and the second ground.

9. The power supply according to claim 2, wherein the second terminal includes a lower end extending to the substrate or spaced apart from the substrate.

10. A power supply, comprising:

a substrate; a switching unit disposed on the substrate, the switching unit being configured to alternately switch input direct current power to convert the input direct current power into alternating current power; a transformer disposed on the substrate, the transformer being configured to convert a level of the alternating current power; a rectifier disposed on the substrate, the rectifier being configured to rectify the alternating current power having the level converted by the transformer; and an output inductor disposed adjacent to the transformer and connected to the transformer, wherein the transformer includes a plurality of terminals, wherein the plurality of terminals includes:

first and third terminals; a second terminal located between the first terminal and the third terminal; and an additional terminal extending from the second terminal to an outside of the first or third terminal, wherein the rectifier includes:

a first switch connected between the first terminal of the transformer and a first ground; and a second switch connected between a second ground connected to the first ground and the third terminal, and wherein the output inductor is connected to the additional terminal of the transformer.

# FIG. 1

# FIG. 2A

# FIG. 2B

# FIG. 3

# FIG. 4A

# FIG. 4B

# FIG. 5

# FIG. 6

# FIG. 7

# FIG. 8

# FIG. 9

# FIG. 10

# FIG. 11

<div align="center">**INTERNATIONAL SEARCH REPORT**</div>

| International application No. |
| --- |
| **PCT/KR2022/021407** |

**A. CLASSIFICATION OF SUBJECT MATTER**

**H01F 30/04**(2006.01)i; **H01F 30/06**(2006.01)i; **H02M 3/00**(2006.01)i; **H02M 3/335**(2006.01)i; **H02M 1/00**(2007.01)i; **H02M 1/44**(2007.01)i

According to International Patent Classification (IPC) or to both national classification and IPC

**B. FIELDS SEARCHED**

Minimum documentation searched (classification system followed by classification symbols)

H01F 30/04(2006.01); G02F 1/133(2006.01); H01F 27/28(2006.01); H01F 27/30(2006.01); H01F 27/32(2006.01); H01F 5/00(2006.01); H02M 1/00(2007.01); H02M 7/217(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 트랜스포머(transformer), 단자(terminal), 연장(extend), 스위칭부(switching circuit), 정류부(rectifying circuit), 인덕터(inductor), 접지(ground)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-222153 A (TDK CORP.) 12 November 2012 (2012-11-12)<br>See paragraphs [0052]-[0088] and figures 11-16. | 1-10 |
| A | JP 2014-229909 A (TOYOTA MOTOR ENGINEERING & MANUFACTURING NORTH AMERICA INC.) 08 December 2014 (2014-12-08)<br>See paragraph [0046] and figures 1-7. | 1-10 |
| A | US 2019-0115141 A1 (DELTA ELECTRONICS (SHANGHAI) CO., LTD.) 18 April 2019 (2019-04-18)<br>See paragraphs [0014]-[0020] and figures 1-4. | 1-10 |
| A | KR 10-2021-0064958 A (LG INNOTEK CO., LTD.) 03 June 2021 (2021-06-03)<br>See paragraphs [0040]-[0062] and figures 3 and 4. | 1-10 |
| A | KR 10-0918181 B1 (SAMSUNG ELECTRONICS CO., LTD.) 22 September 2009 (2009-09-22)<br>See paragraphs [0027]-[0033] and figures 1 and 2. | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 March 2023** | **30 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/021407**

| Patent document cited in search report | | | Publication date (day/month/year) | Patent family member(s) | | | Publication date (day/month/year) |
|---|---|---|---|---|---|---|---|
| JP | 2012-222153 | A | 12 November 2012 | JP | 5273192 | B2 | 28 August 2013 |
| | | | | US | 2012-0257420 | A1 | 11 October 2012 |
| | | | | US | 8536967 | B2 | 17 September 2013 |
| JP | 2014-229909 | A | 08 December 2014 | JP | 5795663 | B2 | 14 October 2015 |
| | | | | US | 2014-0347155 | A1 | 27 November 2014 |
| | | | | US | 9019059 | B2 | 28 April 2015 |
| US | 2019-0115141 | A1 | 18 April 2019 | CN | 207441438 | U | 01 June 2018 |
| | | | | US | 10332668 | B2 | 25 June 2019 |
| KR | 10-2021-0064958 | A | 03 June 2021 | US | 2023-0006566 | A1 | 05 January 2023 |
| | | | | WO | 2021-107480 | A1 | 03 June 2021 |
| KR | 10-0918181 | B1 | 22 September 2009 | AU | 2003-282452 | A1 | 23 June 2004 |
| | | | | CN | 1711807 | A | 21 December 2005 |
| | | | | CN | 1711807 | B | 28 July 2010 |
| | | | | KR | 10-2004-0048056 | A | 07 June 2004 |
| | | | | US | 2006-0139013 | A1 | 29 June 2006 |
| | | | | US | 2008-0094001 | A1 | 24 April 2008 |
| | | | | US | 7332869 | B2 | 19 February 2008 |
| | | | | US | 7642726 | B2 | 05 January 2010 |
| | | | | WO | 2004-051829 | A2 | 17 June 2004 |
| | | | | WO | 2004-051829 | A3 | 02 December 2004 |

Form PCT/ISA/210 (patent family annex) (July 2022)